(19) Europäisches Patentamt
European Patent Office
Office européen des brevets

(11) Publication number: **0 235 998 A2**

(12) # EUROPEAN PATENT APPLICATION

(21) Application number: **87301319.7**

(51) Int. Cl.[4]: **C08F 8/36** , B01J 31/10

(22) Date of filing: **16.02.87**

(30) Priority: **25.02.86 US 832626**
**25.02.86 US 832627**
**30.12.86 US 947788**

(43) Date of publication of application:
**09.09.87 Bulletin 87/37**

(84) Designated Contracting States:
**BE DE FR GB IT NL**

(71) Applicant: **THE DOW CHEMICAL COMPANY**
**2030 Dow Center Abbott Road P.O. Box 1967**
**Midland, MI 48640(US)**

(72) Inventor: **Childress, David Lee**
**Forest Hills East Hwy 59 P.O. Box 1212**
**La Grange Texas 78945(US)**
Inventor: **Tasset, Emmett Lee**
**111 White Oak**
**Lake Jackson Texas 77566(US)**
Inventor: **Weaver, John Doyl**
**243 Acacia**
**Lake Jackson Texas 77566(US)**
Inventor: **Martin, Charles William**
**1110 Flag Drive**
**Lake Jackson Texas 77566(US)**
Inventor: **Ezzell, Bobby R.**
**5 Deer Court**
**Lake Jackson Texas 77566(US)**

(74) Representative: **Burford, Anthony Frederick et al**
**W.H. Beck, Greener & Co. 7 Stone Buildings**
**Lincoln's Inn**
**London WC2A 3SZ(GB)**

(54) **Supported fluorocarbonsulfonic acid polymers and methods for their preparation.**

(57) A heterogeneous acid catalyst is prepared by coating a carrier with a dispersion, preferably an aqueous emulsion, containing a fluorocarbonsulfonic acid polymer in the sulfonyl fluoride form, removing the excess water, heating to a temperature above the softening point of the polymer for a time, and then converting the polymer to the active sulfonic acid form. Alternatively, a heterogeneous acid catalyst is prepared by treating a carrier material with a solution containing a fluorocarbonsulfonic acid polymer dissolved in a suitable solvent, removing the solvent, and heat treating the coated carrier to prevent the polymer from being leached off the carrier. Preferably, the substrate has pores of about 0.1 micrometers or greater and a surface area of 20 m²/g or less. The catalysts with a support having an average pore diameter of at least 0.1 micrometers are novel and claimed per se.

EP 0 235 998 A2

## SUPPORTED FLUOROCARBONSULFONIC ACID POLYMERS AND METHODS FOR THEIR PREPARATION

The polymers of interest to this invention are substantially fluorinated and have pendant chains containing sulfonic acid groups or derivatives of sulfonic acid groups. The sulfonic acid groups exhibit extraordinarily high acid strength compared to sulfonic acids that are not fluorinated. Therefore, these materials are very useful as strong acid catalysts and have been shown to be effective in catalyzing many different reactions, such as: hydration of olefins and epoxides, dehydration of alcohols, alkylation and acylation of aromatic hydrocarbons, isomerization and alkylation of paraffins, nitration of organics, pinacolone rearrangements, esterification of carboxylic acids, hydrolysis of carboxylic acid derivatives, and Diels-Alder condensations. Some metal salts of fluorocarbonsulfonic acids, such as those in U.S. 4,446,329, also have been shown to be useful in catalyzing some reactions.

Fluorocarbon polymers with sulfonic acid pendant groups have advantages over other types of acid catalysts in that the fluorocarbon portion gives extraordinary chemical and thermal stability, as well as almost complete insolubility in most systems. Therefore, the polymer can be used as a heterogeneous catalyst and can be recovered very easily and reused. Since the reaction occurs on or near the catalyst surface, the amount of surface area must be maximized to obtain optimum efficiency, defined as activity per unit weight of catalysts. This is especially important when considering fluorocarbon polymers because of their relatively high cost. One factor that has prevented wide-spread use of these materials as catalysts is their high cost. Their manufacture required more specialized technology and a larger capital investment than for conventional ion exchange catalysts. It is for this reason that the catalytic efficiency of such a product must be maximized. As noted above, the catalytic efficiency as defined as the amount of product produced divided by the amount of catalyst used. One technique of increasing the efficiency of a heterogeneous catalysts is to increase its surface area, thereby exposing more reactive surface while involving less unused catalyst below the surface.

Reactions that are catalyzed by fluorocarbonsulfonic acid polymers can occur at or near the catalyst surface. The extent to which the reactants can diffuse beneath the surface of the catalyst to contact acid groups is dependent on several factors, including the polarity of the reaction medium and the equivalent weight of the fluorocarbon polymer. In some instances, portions of the catalyst beneath the surface are inaccessible to the reactants because diffusion is limited, which results in an inefficient use of the polymer. Therefore, to obtain optimum catalytic efficiency, it is desirable to increase the surface area of the catalyst to such a point that reactivity is not limited by diffusion and that all of the acid groups are accessible to the reactants. Catalytic efficiency is defined as the amount of product that is produced divided by the amount of catalyst that is used. The process of this invention of applying a coating of polymer to a carrier increases the ratio of active surface area to weight of polymer compared to that for an unsupported polymer catalyst. Simply increasing the surface area per weight will not provide improved performance.

In the prior art, increasing the surface area of a fluorocarbon polymer has been accomplished by several methods, all of which have inherent disadvantages. By decreasing the particle size of a solid, the surface area is increased. However, the disadvantages of using a fine particulate catalyst include poor flow dynamics, plugging problems, loss of catalyst by entrainment, and more difficult catalyst recovery.

As an example of one prior art enhancement, the fluorocarbon can be extruded into tubing while it is in the thermoplastic sulfonyl fluoride ($SO_2F$) form, then converted to the sulfonic acid. Extrusion into tubing requires expensive, specialized equipment and careful handling of the fragile material during processing and reactor assembly. Furthermore, the mechanical strength of the polymer is such that tubing with a wall thickness less than 0.005 inches (0.13 mm) becomes impractical. This results in only a modest surface area to weight ratio.

The polymer in the thermoplastic sulfonyl fluoride form can be melt deposited onto a solid substrate, and then the surface layer can be converted to the sulfonic acid. This process also requires specialized equipment to form the catalyst to the desired shape of the substrate. Only the portion of the polymer on the surface is used in the catalytic process since the subsurface portion must remain in the $SO_2F$ form to remain bonded to the substrate. This is an inefficient use of the expensive polymer because the surface area is small compared to the amount of polymer below the surface. As taught herein, optimum limits exist for such coatings.

Although the fluorocarbon polymers of interest to this invention are considered substantially insoluble, it is known that dilute solutions of these polymers in the sulfonic acid form can be prepared in an alcohol solvent. These solutions can then be used to coat supports to make catalyst pellets, for instance. But the process of dissolving the polymer converts it from a substantially insoluble species to a species that is very soluble in many polar solvents. Thus, supported catalysts prepared by this method in the prior art have only limited utility because the polymer redissolves very easily in many solvents.

In U.S. 4,038,213, such a polymer solution is used to coat a porous support to prepare a catalyst composition. The patent teaches that, in order for the catalyst to have high activity, the porous support should possess high surface area (300 $m^2/g$, for example) and an average pore diameter of less than 600A - (0.06 micrometers).

However, when a fluorocarbonsulfonic acid polymer is dissolved in an alcohol solvent, the polymer is converted from a substantially insoluble species to a species that is very soluble in many polar compounds. Therefore, a supported catalyst composition that is prepared by the method described in U.S. 4,038,213 has only limited utility, since the polymer coating redissolves very easily.

In the present invention, an improved supported acid catalyst composition is disclosed which has surprisingly high catalytic activity and is very resistant to activity loss caused by loss of the polymer coating. A unique feature of the present invention is that, contrary to what is taught in U.S. 4,038,213, high surface area is not necessary, and it is preferable to use a support having an average pore diameter of 1000A (0.1 micrometers) or greater. For example, a catalyst support that is especially useful is Norton SA-5205 alumina (typical chemical analysis: $Al_2O_3$ 86.1 weight percent, $SiO_2$ $Fe_2O_3$ 0.2 weight percent $TiO_2$ 0.1 weight percent, CaO 0.4 weight percent, $Na_2O$ 0.4 weight percent MgO 0.4 weight percent, $K_2O$ 0.4 weight percent and smaller amount of other oxides), which has an average pore diameter of approximately 130 micrometers and surface area of approximately 0.01 $m^2/g$. It is unobvious and unexpected from the prior art that a catalyst having low surface area and large average pore diameter would give such high catalytic activity.

Another novel feature of this invention is the process of depositing the polymer onto a support from a dispersion that contains the polymer in the sulfonyl fluoride form. Representative fluorinated polymers having sulfonyl functional groups, such as those described in U.S. Patents 3,282,875; 4,329,435; 4,330,654; and 4,358,545, can be prepared by emulsion polymerization. Typically, the aqueous latex from the emulsion polymerization contains the emulsified polymer in its sulfonyl fluoride form as spherical particles with an average diameter of from 0.001 micrometers to 10 micrometers. In the present invention, a support having an average pore diameter greater than 0.1 micrometer is treated with this aqueous latex, so that the emulsified polymer particles are absorbed onto the walls throughout the support. The excess water is removed, the coated support is heated to a temperature to melt the thermoplastic polymer, causing it to flow and become bonded to the walls of the support. The polymer is then converted by hydrolysis to the sulfonic acid or sulfonate form, which has catalytic activity. The resulting composition is an improved supported acid catalyst that is more resistant to loss of polymer by leaching than other materials in the prior art.

Still another aspect of the present invention is the surprising discovery that a polymer having sulfonic acid groups can be deposited onto a support from a solution, as described above, and then annealed at an elevated temperature, thereby rendering the polymer insoluble. This annealing step unexpectedly reduces polymer leach during a reaction, thereby resulting in a more durable and long lasting catalyst. By supporting the polymer on a carrier, the surface area of the catalyst is increased, and this in turn improves the catalytic efficiency and lowers the cost of the catalyst.

This invention in one aspect discloses improved heterogeneous acid catalyst compositions and a novel, unobvious method of preparing these catalyst compositions. The catalyst composition comprises a fluorinated polymer having pendent sulfonic acid groups, or derivatives of sulfonic acid groups, on a support which support has an average pore diameter greater than 0.1 micrometer. The method of preparation involves (a) treating a substitute material with a dispersion that contains a fluorinated polymer which has pendent claims containing sulfonyl groups ; (b) removing the dispersing medium from the mixture, and (c) converting the sulfonyl groups to sulfonic acid or sulfonate groups. The polymer dispersion may be in a hydrophilic organic compound, such as is described in U.S. 4,341,685. However, for safety and convenience, it is preferable to use an aqueous dispersion of the polymer, such as is obtained from an emulsion polymerization. The use of the polymer in the sulfonyl fluoride form in a dispersion comprises an improvement in the preparation of a heterogeneous catalyst, in that this form of the polymer is thermoplastic, and therefore, it can be melted and become fused to the carrier surface. The ease and convenience with which a catalyst can be prepared by this method comprises a further improvement in catalyst preparation.

In another aspect the present invention concerns the method of supporting a fluorinated polymer having pendant chains containing sulfonic acid groups, on a support, comprising the steps:

(a) soaking a substrate with a solution that contains a fluorinated polymer having pendant chains containing sulfonic acid groups:

(b) removing the solvent from the mixture;

(c) heating the remaining composition to above the glass transition temperature of the polymer for a sufficient time to render the polymer insoluble.

The final heat treatment, or annealing, of the composition comprises the improvement in the preparation of a heterogeneous catalyst in that the step increases the resistance of the polymer to being leached from the carrier surface and it results in a more durable, and therefore more efficient acid catalyst. In addition, other polymer coated articles, such as ion specific electrodes, prepared by the techniques described herein also would be greatly improved.

The polymers that are applicable to this invention have structures that include a substantially fluorinated carbon chain that has attached to it side chains that are also substantially fluorinated and contain sulfonic acid groups or derivatives of sulfonic acid groups. They may contain sulfonate salts of metals, such as iron, aluminum, zinc, copper, chromium, and others. There may be other side chains present that do not contain sulfonic acid groups, if desired, such as fluorinated alkyl or ether chains with no other functional groups attached to them. There also may be atoms present in these chains other than carbon and fluorine, such as oxygen, chlorine, and bromine. Examples of these polymers are those described in U.S. patents 3,282,875; 4,329,435; 4,330,654 and 4,358,545. The fluorocarbon portion of the polymer molecule contributes such desirable properties as high thermal and chemical stability and low solubility. The sulfonic acid groups exhibit extraordinarily high acid strength compared to sulfonic acids that are not fluorinated. Therefore, these materials are very useful as strong acid catalysts and they have been shown to be effective in catalyzing many different types of reactions.

Typical polymers that may be used in this invention have the general structure described below:

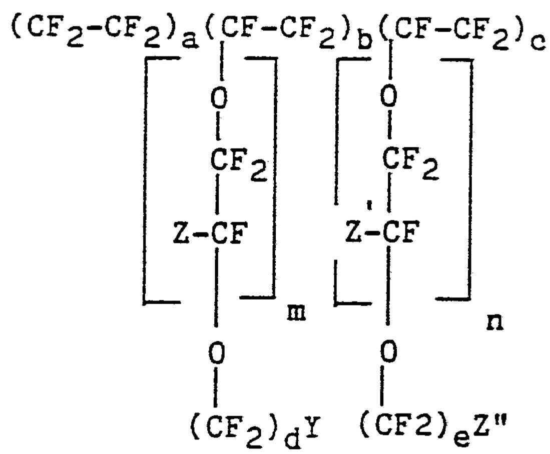

wherein Y is $SO_2F$, $SO_3H$, or any group easily converted to $SO_3H$;
Z, Z', and Z" are independently F, Cl, Br, $CF_3$, $CF_2Cl$, or fluorinated alkyl;
a and b are independently positive integers with the provision that the ratio of a/b varies from 2 to 50:
c is 0 or an integer greater than 0;
m and n are independently 0 or an integer of 1 to 4;
and
d and e are independently an integer of 2 to 5.

In the identified variables, the value of a variable at one location in the formula does not limit the value at another location in the formula. At the various occurrences of the m, n, d or e, the values can be equal or different. The same is true of the radical Z at the various locations. In that sense, the values are said to be 'independent'.

Since reactions involving heterogeneous catalysts can occur at or near the surface of the catalyst, it is desirable to increase the active surface area of the catalyst in order to obtain optimum catalytic efficiency. Several attempts at this have been made in the prior art, but each attempt results in inherent disadvantages. In this invention, novel and unobvious processes are disclosed for supporting a sulfonyl functional fluorinated polymer on a support, thereby creating a catalyst with more active surface area and improved durability.

Fluorinated polymers with sulfonyl functional groups can be prepared by emulsion polymerization, as described in U.S. Patents 4,330,654 and 4,358,545. In the present invention, the aqueous latex from the emulsion polymerization contains the polymer in the sulfonyl fluoride form, which is thermoplastic. A support is treated with aqueous latex containing polymer so that the emulsified polymer particles are adsorbed onto the walls of the support. Excess water from the latex is removed, and the coated support is heated to the melt temperature of the thermoplastic polymer, bonding the polymer to the walls of the support. The polymer is converted by hydrolysis to the sulfonic acid form, which can then function as an acid catalyst.

In this invention, the use of the aqueous latex from the emulsion polymerization process results in several unique advantages. The latex typically contains the emulsified polymer as spherical particles with average size ranging from 0.001 micrometers to 10 micrometers in diameter. However, larger or smaller particles can be obtained if desired. This small particle size allows the polymer to penetrate into the pores and crevices of a catalyst support. Once the support has been impregnated with the polymer, the aqueous phase is evaporated and the polymer particles are deposited onto the support material. Because the sulfonyl fluoride form of the polymer is thermoplastic, the burdened support can be heated above the melt point of the polymer, causing the particles to flow together and become bonded to each other. This results in a uniform thin coating of polymer inside the pores of the support which is more resistant to leaching than a coating of particulate unmelted polymer.

Another advantage unique to this system is that the concentration of polymer in the latex can be varied over a wide range. Preparation of solvent solutions of fluorinated sulfonyl functional polymers described in the prior art requires high temperature and pressure equipment, and they are limited in concentration to a maximum of 5 weight percent solids. In contrast, the latex can be obtained with a polymer concentration as high as 50 percent by weight or higher. The usual operative range is 15 percent to 30 percent by weight and the concentration can be adjusted further by the addition or removal of water. This large range allows the loading of the polymer on the support to be adjusted very conveniently without the need to handle large volumes of solutions.

A further advantage to this method is that the polymer can be used directly from the latex in which it is prepared. Polymer isolation, purification, and redissolution processes are avoided, thus eliminating much of the difficulty and expense of preparing a supported catalyst. And since the latex is aqueous, the handling of hazardous liquid materials is eliminated.

The composition of the carrier in not critical, and the properties that are considered desirable for a carrier may vary in different applications. Properties that may be important in some situations include high crush strength, high porosity, chemical resistance, thermal stability, and low cost. In U.S. Patent 4,038,213 it is taught that the carrier should have high surface area and an average pore diameter of less than 0.06 micrometers. In fact, this is not the case. A support with low surface area, less than 1 $m^2/g$, can be used to prepare a catalyst with surprisingly high catalytic efficiency. Preferably, the support has a surface area of less than 20 $m^2/g$, most preferably the surface area is 0.25 $m^2/g$. For supporting the polymer by the present coating method, it is preferable for the support to have an average pore diameter greater than 0.1 micrometer in order to accommodate the polymer particle size in the latex. In all cases, the carrier must be resistant to the aqueous polymer latex and to the high temperature reached during the bonding procedure. Some representative materials that can serve as carriers include alumina, silica, zeolites, silicon carbide, silica-alumina, porous glass, ceramic, spinel, clay, and carbon. The preferred amount of polymer to support is between 0.1 and 50 weight percent, preferably, up to 25 percent. The optimum amount of polymer on the support is dependent on a number of variables including the specific gravity of the support, the pore size and the properties of the reaction medium. In general, the productivity in a reaction should increase as the amount of polymer increases up to the optimum amount. Above this amount portions of the polymer become increasingly inaccessible to the reactants and the efficiency of the catalyst decreases. It is preferred therefore that the weight percent polymer on the support should not exceed the optimum level for the particular support and the particular reaction being catalyzed. For alumina supports described herein, the optimum level may be as low as 13 to 15 weight percent while the optimum for silicon carbide supports may be 20 to 25 weight percent. For given reactions and given supports, this optimum amount can vary over wide ranges up to as high as 50 weight percent. There may be instances in which the compositions prepared by the processes of this invention may be used for applications other than acid catalysis. In these instances, the carriers may be of some form or material other than those described above.

In the method of this invention wherein the polymer is deposited onto support from a solution, the polymer is usually produced in the sulfonyl fluoride form, which is thermoplastic and can be melt fabricated by conventional techniques, such as extrusion or pressing. After it is hydrolyzed to the acid form, the polymer is not nearly as thermoplastic as it was originally, and it is therefore difficult to fabricate into useful

shapes and forms. It cannot be melt extruded, although some softening occurs above 150°C. However, it is possible to dissolve the polymer by heating it with an aqueous alcohol, particularly 50 percent aqueous ethanol, to 250°C or higher for several hours in a high pressure autoclave. This converts the polymer from a species that is substantially insoluble to a species that is very soluble in many polar solvents. The resulting mixture may not be a true solution, but instead may be a dispersion of finely divided particles. In this invention, "polymer solution" is also understood to encompass dispersions. These solutions can be filtered through a 0.2 micrometer filter. Other solvents and mixtures may also be effective in dissolving the polymer.

In this aspect of the invention, the polymer is deposited on the carrier by soaking the carrier in the polymer solution and then removing the solvent. Ordinarily, if this composition is treated again with a polar solvent, even at ambient temperature, the polymer redissolves very quickly. Thus, such a composition is not useful as a heterogeneous catalyst in many applications. However, heating the composition to a sufficient temperature for a sufficient time renders the polymer insoluble and prevents it from redissolving. Such a composition is much more useful as an acid catalyst due to its improved durability. This process can be reversed by repeating the high temperature dissolution in 50 percent ethanol in order to recover the polymer from the carrier.

Reducing the solubility by heating the polymer can be referred to as an annealing process. Annealing probably can occur at any temperature above the glass transition temperature of the polymer, which occurs around 20°C to 50°C for most fluorocarbons of interest here. But the viscosity of the polymer is very high, especially below 150°C, and the time required for the polymer to anneal is prohibitively long at low temperature. Also, the stability of most typical polymers decreases markedly above 300°C. These practicalities define lower and upper limits on the process step. Therefore, the annealing temperature preferably is above 100°C, more preferably between 150°C and 300°C, and most preferably between 200°C and 225°C. at 225°C, annealing is essentially complete within one hour.

The composition of the carrier is not critical, and the properties that are considered desirable for a carrier may vary in different applications. Properties that may be important in some situation include high surface area, high crush strength, high porosity, chemical resistance, thermal stability, and low cost. In all cases, the carrier must be resistant to the sulfonic acid polymer solution and to the high temperature reached during the annealing procedure. Some representative materials that could serve as carriers include alumina, silica, zeolites, silicon carbide, silica-alumina, porous glass, ceramic, spinel, clay and carbon. The preferred weight ratio of polymer to support is between 0.001 and 0.50. There may be instances in which the compositions prepared by the processes of this invention may be used for application other than acid catalysis. In these instances, the inert carriers may be of some form or material other than those described above.

The following examples are illustrative of certain specific embodiments of this invention.

<u>Example 1</u>

This example discloses the method of preparing a heterogeneous acid catalyst by coating a carrier with an aqueous latex of polymer derived from emulsion polymerization. One product obtained from the emulsion polymerization of tetrafluoroethylene with
($CF_2$= $CFOCF_2CF_2SO_2F$)
was an aqueous latex containing 29 weight percent polymer solids with equivalent weight of 800 gm/eq. The latex (3.5 gm) was diluted to 15 ml with water and added to 20 gm of various selected predried supports. The excess water was removed by heating on a hot plate with gentle stirring. Then the loaded support was heated to 250°C for 20 minutes in an oven. The product was mixed with 100 ml of 20 percent NaOH and was stirred and heated for 90 minutes and then stirred at room temperature overnight. The pellets were filtered and charged to an ion exchange column. They were washed with water until the eluent was neutral, and then the polymer was converted to the acid form by treatment with 500 ml of 3N HCl. The acidified particles were washed and dried. Polymer loading, as shown in Table I, was determined by weight gain.

<u>Example 2</u>

The polymer emulsion used in Example 1 was added without dilution to 20.0 g of a silicon carbide support, which has an average pore diameter of approximately 50 micrometers. After several minutes,

Table I

| Sample | Support Type | Average Pore Diameter (Micrometers) | Untreated Support (g) | Loaded Support (g) | Polymer Loading (wt %) |
|---|---|---|---|---|---|
| A | Alumina | 1.2 | 20.0 | 21.0 | 4.8 |
| B | Alumina | 130 | 20.0 | 21.0 | 4.8 |
| C | Alumina | 130 | 20.0 | 22.9 | 3.9 |
| D | Silicon Carbide | 50 | 20.0 | 20.9 | 3.9 |

the loaded support was baked, hydrolyzed, and acidified as in Example 1. The weight of the loaded support was 23.2 g, accounting for 13. 8 weight percent loading.

Example 3

Samples of the supported catalyst prepared in Examples 1 and 2 were titrated with 0.01N NaOH to determine acid content. The polymer loading determined by titration, as shown in Table II, agrees closely with that determined by weight gain in the previous examples. This shows that the polymer was not leached from the support during processing.

TABLE II

| Sample | Sample size (mg) | Acid Capacity (meq) | Polymer Loading | |
|---|---|---|---|---|
| | | | wt (mg) | Wt % |
| B | 1018.3 | 0.0615 | 49.20 | 4.8 |
| C | 1008.5 | 0.0510 | 40.80 | 4.0 |
| D | 1069.7 | 0.0562 | 44.96 | 4.2 |
| Ex. 2 | 197.2 | 0.0391 | 31.28 | 15.9 |

Example 4

The utility of the supported acid catalyst prepared in Example 1 was demonstrated by this example. A 50 ml flask with a still head was charged with 1.0 g of supported catalyst from Sample D of Example 1 and with 32.2 g (358 millimoles) of 1,4-butanediol. The mixture was heated to 165°C and the volatile products were distilled off. The distillate was analyzed, showing a mixture of tetrahydrofuran and water. As further example of the utility of the catalyst, a composition with a polymer loading of 4.4 weight percent on alumina was prepared as in Example 1. It was loaded into a reactor tube and heated it to 150°C. Propylene and water in a mole ratio of 1/7 were fed to the reactor. The product stream contained 2-propanol in 99 percent selectivity.

Example 5

This example demonstrates the improved catalytic efficiency that is obtained by supporting the polymer on a carrier.

The carrier was a 1/16 inch (1.6 mm) spherical alumina that had an average pore diameter of approximately 8 micrometers and surface area of approximately 0.25 $m^2/g$. The fluorocarbon polymer was the same as that used in Example 1, except that its equivalent weight was 935. The titrated acid capacity of the composition was 0.165 meq/g. This catalyst (2 g, 0.33 meq) was mixed with 90 mmoles of benzene and 60 mmoles of 1-decene at 85°C for 50 minutes, giving 87 percent conversion of decene.

Comparative Example I

In this comparative example, Nafion NR 50 catalyst, a commercial unsupported fluorocarbonsulfonic acid polymer (10-35 mesh (2 to 0.5 mm), equivalent weight 1100; 0.36 g, 0.33 meq) was used to catalyze the reaction of 90 mmoles of benzene and 60 mmoles of 1-decene at 85°C, as described in Example 5. After 60 minutes, the conversion of decene was 4 percent. Nafion is a trademark of E.I. du Pont.

Example 6

In this example, a catalyst carrier was coated with progressively heavier coatings of the fluorocarbon polymer that was used in Example 1, thereby reducing the ratio of surface area to weight of polymer. the carrier was the same as in Example 5.

Four catalyst compositions were prepared. Each was used to catalyze the reaction of diphenyl oxide - (11.3 g 66 mmoles) with dodecene (3.7 g, 22 mmoles) at 145°C. The conversion of dodecene was determined after 18 minutes, 33 minutes, and 60 minutes. The results are described in Table III below.

The reactivities of catalyst samples E, F, and G increase with the amount of polymer that is present, even though they have very low surface areas. This indicates that all of the polymer on each sample is accessible and is being used as a catalyst, and an increase in surface area will not improve their performance in this reaction. Thus, the catalytic efficiencies of these samples are high. Samples G and H have about the same reactivity, even though sample H has about 60 percent more polymer present. This indicates that the optimum polymer coating on sample H has been exceeded, resulting in a less efficient use of the polymer. An increase in surface area would improve sample H.

Table III

| Sample | Polymer Coating | Wt. Catalyst Used (g) | Dodecene Conversion 18 min (wt %) | 33 min (wt %) | 60 min (wt %) |
|---|---|---|---|---|---|
| E | 3.6 | 2.3 | 24 | 39 | 52 |
| F | 5.4 | 2.2 | 30 | 47 | 70 |
| G | 13.4 | 2.1 | 50 | 73 | 90 |
| H | 21.8 | 2.2 | 47 | 72 | 90 |

Example 7

A silicon carbide catalyst carrier (5-6 mm spheres), which had an average pore diameter of 50 micrometers, was coated with an aqueous latex containing the fluorocarbon polymer that was used in Example 1 (40 weight percent solids, equivalent weight 902). The finished catalyst contained 13.8 weight percent polymer on the support and had an acid capacity of 0.153 meq/g.

Toluene (15.46 g, 168 mmoles) and this catalyst composition (0.209 g, 0.32 meq) were placed in a flask and stirred mechanically while it was heated to 100C. When this temperature was reached, 8.33 g (85 mmoles) of 1-heptene were added to the mixture and stirring was continued for 90 minutes. After this time, the reaction mixture was analyzed by gas chromatography to determine the amount of heptene that had reacted. The conversion of heptene was 65.8 percent.

In the following comparative examples, supported catalysts were prepared by coating supports, which had high surface are and small pore sizes, with a solution of Nafion resin (approximately 5 weight percent in ethanol, equivalent weight 1100) that is available commercially. The catalytic efficiencies of these catalysts are shown to be lower than that of the catalyst of the present invention.

Comparative Example II

An alumina catalyst support (1/16 inch (1.6 mm) spheres, 4.62 g), which had a surface area of 125 $m^2/g$ and an average pore diameter of 0.014 micrometers, was treated with a solution of Nafion in ethanol. The solvent was evaporated under vacuum, leaving 5.04 g of coated support. This gave a catalyst that contained 8.01 weight percent Nafion (0.0728 meq/g).

This catalyst (3.85 g, 0.28 meq) was added to catalyze the reaction of toluene (15.54 g, 169 mmoles) and 1-heptene (8.36 g, 85 mmoles) by the procedure that was described in example 7. The conversion of heptene after 90 minutes was 9.6 percent.

Comparative Example III

In this comparative example, 9.25 g of Davison RD silica gel beads (surface area 770$m^2/g$; average pore diameter 0.008 micrometers; 10 to 30 mesh (2 to 0.6 mm)) were coated with a solution of Nafion in ethanol. After the solvent was evaporated under vacuum, there was 10.30 g of supported catalyst (10.19 weight percent Nafion, 0.0926 meq/g).

Toluene (15.57 g, 169 mmoles) and 1-heptene (8.35 g 85 mmoles) were reacted under the conditions described in Example 7, using 3.09 g (0.30 meq) of this composition as the catalyst. After 90 minutes, the conversion of heptene was 16.6 percent.

The coated catalyst is somewhat temperature sensitive compared to the supportive carrier. The carrier selected should be stable to some selected high temperature. The coating placed on the carrier should not be heated so hot that thermal breakdown occurs. Rather, a reasonable heating range is at least 100°C and upward to 400°C. A more desirable range is 225°C to 325°C. In general terms, coating damage at the elevated temperature should determine the upper limit.

Example 8

This procedure describes the preparation of solution containing a fluorinated polymer having sulfonic acid functional groups. The polymer used in Examples 8-12 has the structure:

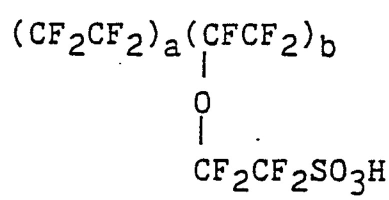

where the ratio a/b is such that the equivalent weight of the polymer is 930 gm/equivalent.

A glass-lined stirred autoclave was charged with 150 ml of 95 percent ethanol, 150 ml of water, and 15 gm of the fluorinated polylmer. The autoclave was sealed and heated to 250°C with vigorous stirring for three hours. It was then cooled to room temperature and vented. Afterwards, the autoclave contained a light brown, slightly turbid liquid. The contents were filtered through a coarse filter (40 to 60 micrometers) and

again through a fine filter (4 to 5.5 micrometers) to obtain a clear, slightly colored solution. By titration with 0.01N NaOH, the acid capacity of the solution was determined to be 0.0740 milliequivalents/g. This corresponds to approximately 6.9 weight percent polymer in the solution.

Example 9

This example discloses the process of annealing a polymer to reduce or eliminate the solubility of the polymer. The solvent was evaporated from approximately 10 g of a solution of polymer prepared as described in Example 8, leaving a brown solid residue. Upon addition of 5 ml of ethanol, the residue redissolved very readily without heating or agitation. The solvent was again removed and the flask containing the residue was heated to 155 to 165°C for three days. After cooling, ethanol was added to the residue. There was no apparent dissolution of the residue. This vividly demonstrates the change in solubility of the polymer induced by the heat treatment, or annealing.

Example 10

In this example, the effect of annealing a coated catalyst is demonstrated. An alumina catalyst polymer was dried and then soaked for 20 minutes in the polymer solution of Example 8. The excess liquid was decanted and the coated support was dried under vacuum for one hour at 50 to 75°C. The acid capacity was determined by titrating a portion of the coated product with standard NaOH. A second portion was washed in boiling ethanol for 30 minutes, dried at 100°C under vacuum for two hours and then titrated. A third portion was baked at 100°C for 24 hours prior to undergoing the same treatment as the second portion. A fourth portion was baked at 200°C for one hour prior to undergoing the same wash and dry treatment. The results of these procedures, described in Table IV, show that one effect of annealing the supported polymer catalyst is reduced solubility of the polymer. Without annealing, hot ethanol leached all of the polymer from the support.

Table IV

| Portion | Annealing | Solvent | Acid Capacity meq/g | Polymer Coat (wt %) |
|---|---|---|---|---|
| 1 | None | None | 0.0271 | 2.03 |
| 2 | None | Hot ethanol | 0.0 | 0.0 |
| 3 | 100°, 24 hr | Hot ethanol | 0.0102 | 0.94 |
| 4 | 200°, 1 hr | Hot ethanol | 0.0189 | 1.77 |

Example 11

The effect of annealing a coated catalyst support for extended periods of time at 15°C is demonstrated in this example. A solution containing 9.4 weight percent polymer in 50 percent ethanol was prepared as in Example 8. An alumina catalyst support was soaked in this solution and the solvent was removed under vacuum. In each of three runs, the coated support was heated to 175°C for the time indicated in Table V and then was divided into two portions. One portion was titrated while the other portion was washed with boiling ethanol for 30 minutes, dried at 100°C under vacuum for two hours, and titrated. The results described in Table V show the positive effect of longer annealing time at 175°C on polymer leach.

Table V

| Run | Anneal Time | Before Ethanol Wash: Acid Capacity (meq/g) | Before Ethanol Wash: Polymer Coating (wt %) | After Ethanol Wash: Acid Capacity (meq/g) | After Ethanol Wash: Polymer Coating (wt %) |
|---|---|---|---|---|---|
| 1 | 24 hrs | 0.0577 | 5.36 | 0.0279 | 2.60 |
| 2 | 48 hrs | 0.0557 | 5.17 | 0.0348 | 3.23 |
| 3 | 72 hrs | 0.0526 | 4.89 | 0.0495 | 4.60 |

A support with a polymer coating is used as an acid catalyst in this example. A catalyst composition with a polymer coating of 2.42 weight percent (acid capacity of 0.026 meq/g) was prepared as in Example 10 and annealed at 250°C for one hour. It was loaded into three reactor tubes and heated to 150°C. Diethylene glycol was pumped into the first of the reactors. 1,4-Dioxane was identified in the effluent of the first reactor. A solution of diphenyl ether and dodecene was fed into the second of the reactors. The major product of this second reactor was dodecylphenyl phenyl ether. Propylene and water were fed to the third reactor. 2-Propanol was collected in the effluent of the third reactor. These varied uses confirm the utility of the novel catalyst of this invention.

## Claims

1. A composition comprising a fluorinated polymer having pendant sulfonic acid groups, or derivatives of sulfonic acid groups, on a support, characterised in that the support has an average pore diameter of at least 0.1 micrometer.

2. A composition as claimed in Claim 1, wherein the fluorinated polymer has the structure:

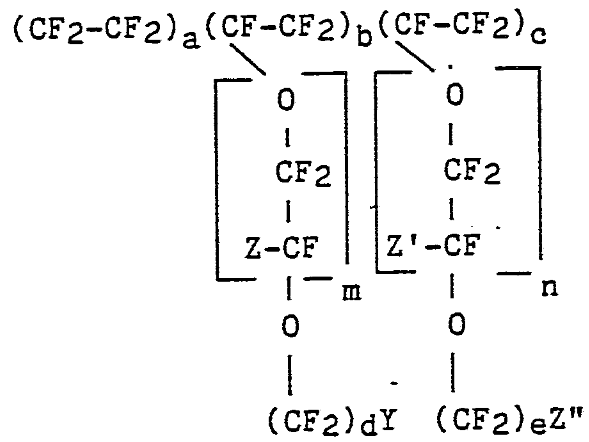

wherein:
Y is $SO_2F$, $SO_3H$, or any group easily converted to $SO_3H$;
Z, Z', and Z" are independently F, Cl, Br, $CF_3$, $CF_2Cl$, or fluorinated alkyl;
a and b independently positive integers with the provision that the ratio of a/b varies from 2 to 50;
c is 0 or an integer greater than 0;
m and n are independently 0 or an integer of 1 to 4;
and
d and e are independently an integer of 2 to 5.

3. A composition as claimed in Claim 1 or Claim 2, wherein the weight percent ratio of polymer on support is 0.1 to 50 weight percent.

4. A composition as claimed in any one of the preceding claims, wherein the support has a surface area of at most 20 $m^2/g$.

5. The method of supporting a fluorinated polymer as defined in Claim 1 or Claim 2, on a support, characterised in that:
(a) a substrate is soaked with a dispersion that contains said fluorinated polymer;
(b) the dispersing medium is removed from the mixture; and
(c) the sulfonyl groups are converted to sulfonic acid or sulfonate groups.

6. A method as claimed in Claim 5, wherein the coated support is heated to melt the sulfonyl form of the polymer prior to converting the sulfonyl groups to sulfonic acid or sulfonate groups.

7. A method as claimed in Claim 6, wherein the coated support is heated to between 100°C and 400°C.

8. A method as claimed in Claim 5 or Claim 6, wherein the substrate has a pore size of at least 0.1 micrometer and/or a surface area of at most 20 $m^2/g$.

9. A method of supporting a fluorinated polymer as defined in Claim 1 or Claim 2, on a support, characterised in that:
(a) a substrate is soaked with a solution that contains said fluorinated polymer;
(b) the solvent is removed from the mixture;
(c) The remaining composition is heated to above the glass transition temperature of the polymer for a sufficient time to render the polymer insoluble.

10. A method as claimed in Claim 9, wherein the temperature is between 150°C and 300°C.

11. A method as claimed in Claim 9 or Claim 10, wherein the solvent is an alcohol or a mixture of an alcohol and water.

12. A method as claimed in any one of Claims 9 to 11, wherein the dissolved polymer passes through a 0.2 micrometer filter.

13. A method as claimed in any one of Claims 9 to 12, wherein the substrate has a pore size of at least 0.1 micrometer and/or a surface area of at most 20 $m^2/g$.